Europäisches Patentamt

European Patent Office

Office européen des brevets

(11) Publication number: **0 021 507**
**A1**

(12) **EUROPEAN PATENT APPLICATION**

(21) Application number: **80200546.2**

(22) Date of filing: **12.06.80**

(51) Int. Cl.³: **B 01 F 7/18**
**A 23 N 1/02, C 11 B 1/04**

(30) Priority: **19.06.79 BE 877078**

(43) Date of publication of application:
**07.01.81 Bulletin 81/1**

(84) Designated Contracting States:
**DE FR GB IT LU NL**

(71) Applicant: **Constructie Werkhuizen VANDEKERCKHOVE N.V.**
**Brugse Steenweg 374**
**B-8800 Roeselare(BE)**

(72) Inventor: **Wyffels, Achiel**
**Kleine Weg 367**
**B-8800 Roeselare(BE)**

(74) Representative: **Ryckeboer, Leo**
**N.V. BEKAERT S.A. Leo Bekaertstraat 1**
**B-8550 Zwevegem(BE)**

(54) **Digester.**

(57) Digester, comprising a vertical cylindrical vessel (1) with supply means and discharge means and a central rotating shaft (3) to which stirring arms (5) resp. ejection arms (6) are fixed and wherein these arms have a V-shaped cross section. The ejection arms have the same shape and dimensions of the stirring arms, but are fixed upside down to the shaft (3). The sitrring arms are preferably concavely bent at their front side and their surfaces (17) and (18) are preferably provided with oblique grooves (19).

FIG.2

- 1 -

Digester

The invention relates to a digester particularly for the preparation of palm fruit from which palm oil is to be extracted by mechanical means.

The process of preparing palm oil is as follows : after having been detached from the cluster branches in a thresher, the palm fruits are further treated in a heated stirring vessel to detach the palm kernels from the flesh. The thus treated pulp is then continuously fed into a press to extract the crude palm oil.

The currently known digesters or stirring vessels are generally cylindrical with a central, vertical rotation shaft to which a number of horizontally and radially extending stirring arms are fixed. In most cases, also a number of radial projections are fixed to the vessel inner wall between the stirring arms in order to stimulate the stirring and kneading action. The vessel wall is heated and a softening agent, e.g. steam and/or hot water, is fed into the vessel to stimulate the scalding of the flesh from around the kernels.

It is generally known to use radially extending stirring arms in digesters, the cross section (tangential to the direction of rotation) of said arms being V-shaped with the point of the V directed forward in the direction of rotation. Special ejection systems are then often provided for the treated products at the bottom of these vessels.

It is now one of the objects of the present invention to provide i.s.o. these systems ejection arms with the same shape and dimensions as the stirring arms, but which are fixed upside down to the vertical shaft with respect to said stirring arms. Moreover these ejection arms offer a proper ejection performance and have the advantage that only one type of arms is necessary which simplifies their replacement (less spare parts).

A preferred embodiment of the stirring arms and the digester will now be described with reference to the adjoined figures for illustration of the subject and the special advantages of the invention.

Figure 1 is a view in elevation of the digester with the stirring arms and ejection arms.

Figure 2 is a horizontal cross sectional view of the digester.

Figure 3 is a detailed view of the stirring arm.

Figure 4 is a cross sectional view of the stirring arm tangential to its direction of rotation.

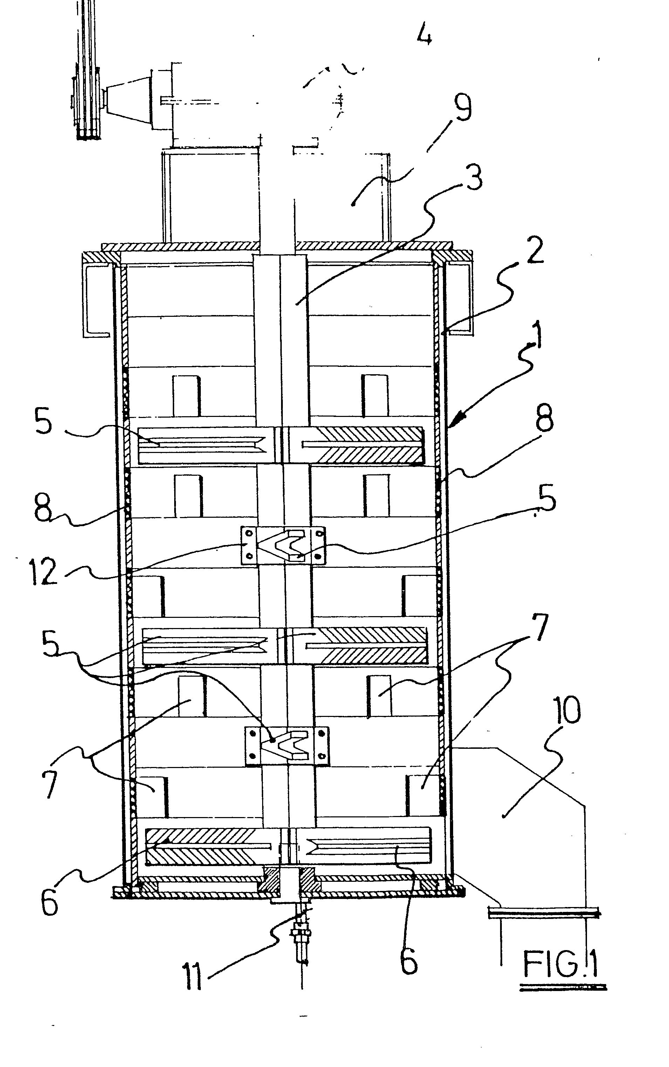

A digester 1 according to the Figure 1 comprises a cylindrical double wall 2 in which a heating means, for example steam, can circulate. In the vessel, a vertical rotation shaft 3 with e.g. square cross section is bearing-mounted. This shaft can be driven by a motor 4 and bears at different levels horizontal stirring arms 5 which extend radially in the vessel, as well as ejection arms 6 at the bottom of the vessel. Preferably radial projections 7 are fixed to the inner wall of the vessel between the levels of the stirring arms, to stimulate the agitation. These radial projections are generally fixed to cylindrical wear rings 8 in the wall. Each ring then supports for example four radial projections. A supply funnel 9 and a discharge funnel 10 are provided respectively at the top and at the bottom of the vessel. A supply pipe 11 for the fruit softening agent (e.g. steam) is also connected to the vessel.

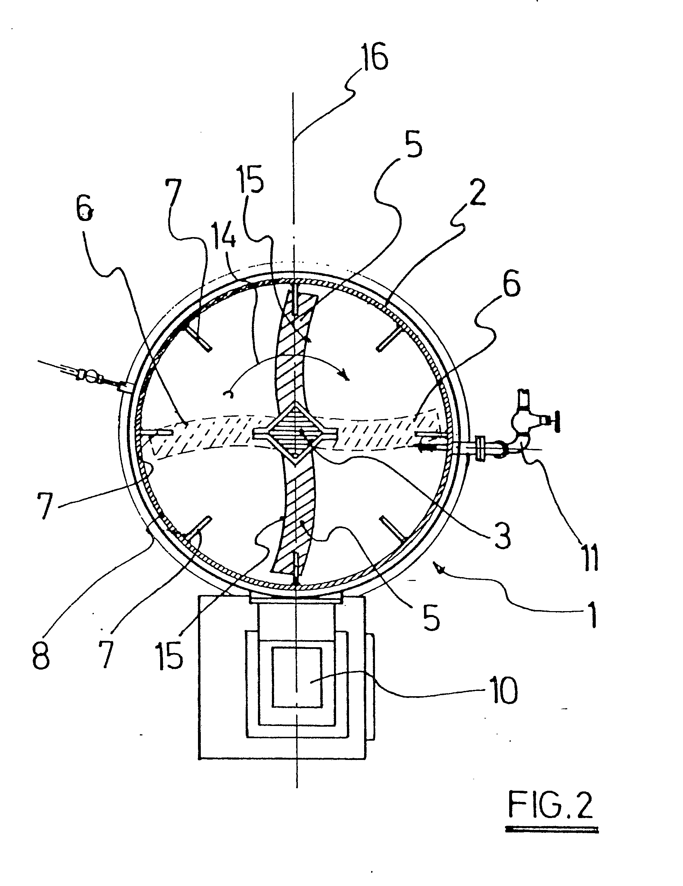

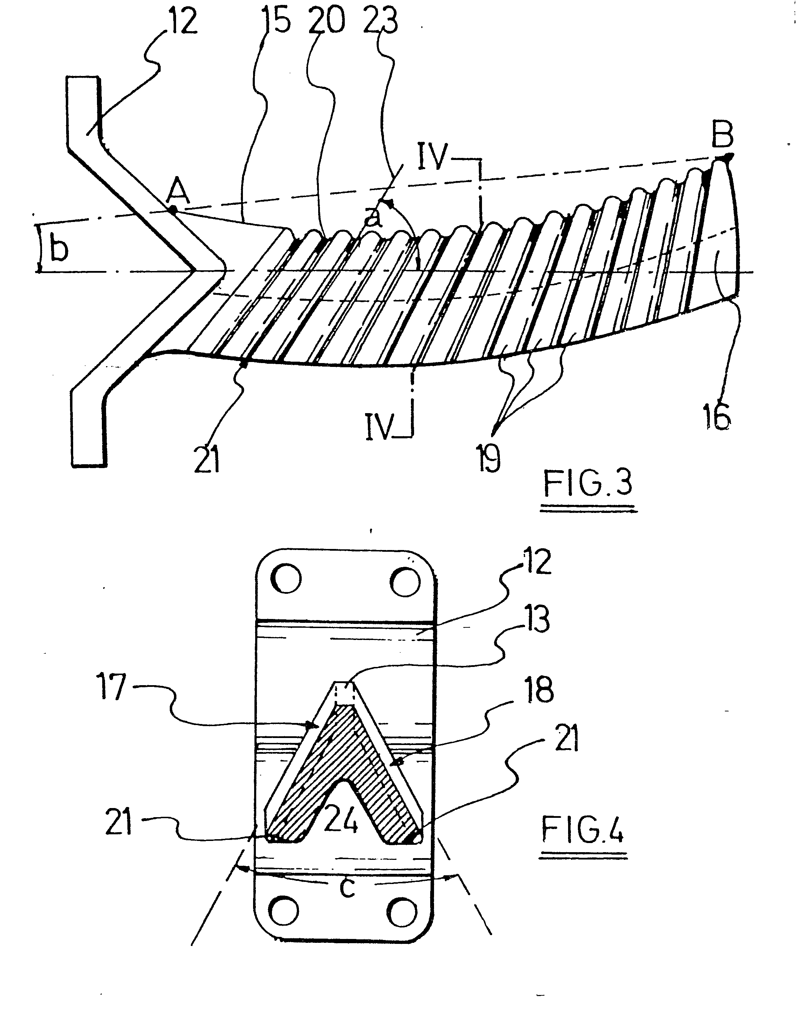

The main feature of the invention is to be found in the shape and the position of the stirring arms resp. the ejection arms in the vessel. These characteristics are further illustrated in Figures 2, 3 and 4. The stirring arms 5 and the ejection arms 6 are fixed to the rotation shaft by means of clips 12 and extend horizontally and radially in the digester. Each stirring arm 5 has a V-shaped vertical cross section tangential to the direction of rotation of the arm, and with the point 13 of the V directed forward in the direction of rotation of the stirring arm. The direction of rotation is indicated by means of arrow 14 in Figure 2. This figure also shows that the stirring arm is preferably slightly concavely bent at its front side 15. It has namely been found that the stirring arms used previously have a tendency to sling the pulp against the vessel wall during the agitation process which causes too much wear to the wall and also reduces the defibration efficiency of the stirring arms. The concavely bent stirring arms take up the pulp somewhat as a scoop during the agitation process so as to bring about a scraping of the wall. The ejection arms 6 however which are fixed upside down to the vertical shaft 3 (with respect to the stirring arms), swing through the digester with their convex side and with the V-grooves 24 as front sides. This stimulates the movement of the pulp at the bottom of the vessel towards the vessel wall 2 and towards the discharge funnel 10. The connection line with the end points A, resp. B of the front side as shown in Figure 3 may form an angle b to the radial direction 16 of the arm 15. This angle b may vary between 20° in advance or 10° behind, but preferably between 10° in advance and 0° in advance. Angle b according to the embodiment in Figure 3 is 6° in advance.

Further features of the shape of the stirring arms are illustrated in Figures 3 and 4. The inclined surfaces 17 and 18 of the stirring arm preferably form an angle c of at least 50°. It has also proved advantageous to provide these surfaces with oblique grooves 19, whereby a same groove near point 13 of the V (e.g. in spot 20), is closer to the wall 2 of the vessel than at the rear side 21 (e.g. in spot 22). The direction 23 of each groove thereby forms an angle a to the direction 16, which is preferably between 20° and 80°.

The successive groove crests and troughs strongly stimulate the defibration process by providing the grinding effect of the fruit on the stirring arm surfaces 17 and 18. Moreover, the oblique direction of the grooves slightly forces the pulp towards the center of the digester during the agitation. This efficiently counteracts the natural tendency of the pulp to slide against the vessel wall (with the resulting excessive wear load on the vessel wall and low defibration efficiency).

The grooves preferably have rounded crests and troughs and form a ribbed edge near the front side 15 of the stirring arm. This edge appears to have a very useful scouring effect on the fruit to be processed and so stimulates the detachment of the pulp fibres sticking to the kernels without damaging them.

The mutual length-to-width ratio of the stirring arm as shown in Figures 3 and 4, also appears to be optimal for the defibration efficiency (maximum defibration for a given flow and energy supply). The stirring arm may be made of cast iron and according to the kind and maturity of the fruit, a rotation speed of 15 to 30 revolutions per minute is applied for full capacity operation.

Although the digester was specifically described with a view to the defibration of palmfruits, its application is not limited to that. Similar defibration treatments on other kinds of fruit and with increased efficiency can also be carried out by using the stirring vessel ; particularly the stirring and ejection arms described above.

Claims :

1. Digester comprising a vertical cylindrical vessel (1) with supply means (9) for the products to be treated, respectively discharge means (10) for the treated products, and a central rotatable shaft (3) to which are fixed at at least two levels a number of horizontal stirring arms as well as ejection arms (6) at the bottom of the vessel, and wherein the cross section of these arms, tangential to the direction of rotation are V-shaped with the point (13) of the V of the stirring arms (5) directed forward in the direction of rotation of the stirring arm, characterized in that the ejection arms (6) have the same shape and dimensions of the stirring arms (5), but are fixed to the central shaft upside down with respect to the stirring arms (5).

2. Digester according to claim 1, characterized in that the stirring arm is concavely bent near its front side (15).

3. Digester according to claim 1 or 2, characterized in that the connection line of the end points A and B of the front side (15) forms an angle to the radial direction between 20° in advance and 10° behind.

4. Digester according to claim 3, characterized in that this angle is between 10° in advance and 0° in advance.

5. Digester according to any of the previous claims whereby the surfaces (17) and (18) of the stirring arms are provided with oblique grooves (19), whereby a same groove near the point (13) of the V is closer to the wall (2) of the vessel than at its rear side (21).

0021507

6. Digester according to claim 5, characterized in that the angle a of each groove with respect to the radial direction (16) of the stirring arm meets $20° \leqslant a \leqslant 80°$.

FIG.1

FIG.2

0021507

3/3

FIG.3

FIG.4

## EUROPEAN SEARCH REPORT

European Patent Office

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | |
| A | FR - A - 2 175 517 (COVAGRI)<br><br>* The whole document * | 1 | B 01 F 7/18<br>A 23 N 1/02<br>C 11 B 1/04 |
| A | FR - A - 1 361 011 (CHEM. WERKE HULS)<br><br>* The whole document * | 1 | |
| A | FR - E - 37186 (KRUPP GRUSON)<br><br>* The whole document * | 1 | TECHNICAL FIELDS SEARCHED (Int.Cl. ³) |
| A | US - A - 3 450 356 (SZEGVARI)<br><br>* Figures 4-9.* | 1 | B 01 F<br>A 23 N<br>D 21 B<br>C 11 B |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 12.08.1980 | KUSARDY |

EPO Form 1503.1   06.78